# EUROPÄISCHE PATENTSCHRIFT

(11) **EP 0 564 875 B1**
(45) Veröffentlichungstag und Bekanntmachung des Hinweises auf die Patenterteilung: **10.12.1997**
(21) Anmeldenummer: 93104565.2
(22) Anmeldetag: 19.03.1993
(51) Int. Cl.: F16D 3/41, F16C 33/78

(54) **Dichtungsanordnung für ein Kreuzgelenk**
Seal device for a universal joint
Dispositif d'étanchéité pour joint universal

(30) Priorität: 08.04.1992 DE 4211757
(43) Veröffentlichungstag der Anmeldung: 13.10.1993
(73) Patentinhaber: GKN Walterscheid GmbH, D-53784 Lohmar (DE)
(72) Erfinder: Buthe, Theo, W-5204 Lohmar 1 (DE)
(74) Vertreter: Harwardt, Günther, Dipl.-Ing.

(56) Entgegenhaltungen:
- DE-A- 1 943 086
- FR-A- 2 123 658
- FR-A- 2 422 860
- FR-A- 2 441 095
- US-A- 3 091 948
- US-A- 3 266 269
- US-A- 3 901 049

## Beschreibung

Die Erfindung betrifft eine Dichtungsanordnung für die Abdichtung der Zapfen eines zu einem Kreuzgelenk für den Einsatz im Antriebsstrang oder für den Antrieb von landwirtschaftlichen Geräten und Arbeitsmaschinen gehörenden Zapfenkreuzes, jweils gegenüber der den Zapfen lagernden, einseitig geschlossenen Lagerbüchse, mit einer Hauptdichtung, die zwischen der Innenfläche der Lagerbüchse und der Außenfläche des Zapfens angeordnet ist, und einer Vordichtung, die am Zapfenkreuz ortsfest gehalten ist und die Lagerbüchse außen übergreift, wobei die Vordichtung mit einem bezüglich der Achse des zugehörigen Zapfens radial nach innen gerichteten Steg in einer um den Zapfen umlaufenden Nut ortsfest einsitzt und die Vordichtung mit ihrem Mantel die zylindrische Außenfläche der zugehörigen Lagerbüchse von deren offenen Stirnfläche her einen Teil deren axialer Länge überdeckt.

Eine solche Dichtungsanordnung ist in der FR-A-2 133 658 beschrieben, bei der die Vordichtung aus einem Plastikmaterial besteht. Ferner weist die Vordichtung gemäß Zeichnung an ihrem die Lagerbüchse übergreifenden Ende in ihrer Innenfläche parallele Nuten auf. Bei der Hauptdichtung handelt es sich offensichtlich um eine Dichtung, die dann, wenn eine Nachschmierung vorgesehen wäre, unter dem Abschmierdruck weiter schließen würde, da die an der Zapfenaußenfläche anliegende Dichtlippe schräg zum Zapfenende hin gerichtet verläuft.

Bei einer Ausführung gemäß der DE-U-88 05 833 ist die Vordichtung nur durch die eigene radiale Vorspannung auf der Zapfenaußenfläche gehalten. Bei Kreuzgelenken, die bei landwirtschaftlichen Geräten zum Einsatz kommen, sind aufgrund der Einsatzverhältnisse größere Spiele in Axialrichtung zwischen dem Zapfen und der Lagerbüchse gegeben, als dies bei Kreuzgelenken, die beispielsweise im Maschinen- oder Fahrzeugbau im Einsatz sind, der Fall ist. Vordichtung und Stirnfläche der Lagerbüchse bewegen sich also in axialer Richtung zueinander. Eine solche Maßnahme kann, wenn bei dem die Lagerbüchsenaußenfläche übergreifenden Teil eine höhere radiale Anpressung auf der Außenfläche der Lagerbüchse gegeben ist, zu einer Lockerung des Sitzes der Vordichtung führen. Die radiale Vorspannung kann also dazu führen, daß sich die Vordichtung gegenüber dem Zapfen bewegt.

Eine solche, nicht eindeutige Positionierung, bei der eine Bewegung sowohl zwischen Vordichtung und der Lagerbüchse als auch zwischen derselben und dem Zapfen eintreten kann, kann zu Undichtigkeiten und vorzeitigem Ausfall der Vordichtung führen.

Die US-A-3,266,269 beschreibt eine Abdichtung zwischen dem Zapfen eines Zapfenkreuzes und der darauf gelagerten Lagerbüchse mit nur einem einzigen Dichtring, der auf einer Stufenfläche des Zapfens gehalten ist und mittels Dichtlippen gegenüber den Flächen eines Bohrungsabsatzes der Lagerbüchse abdichtet. Eine Vordichtung ist nicht vorgesehen.

In der DE-A-19 43 086 ist eine Dichtung für Wellen und Stangen mit mehreren Dichtlippen beschrieben, welche mit unterschiedlichen Durchmessern gefertigt sind, so daß dann, wenn die zuerst mit der Gegenfläche in Berührung stehenden Dichtlippen verschlissen sind, die weiteren zur Anlage kommen und die Dichtfunktion übernehmen.

Der Erfindung liegt daher die Aufgabe zugrunde, eine Dichtung zu schaffen, die auch bei größeren axialen Spielen zwischen Lagerbüchse und Zapfen eine eindeutige Positionierung gegenüber dem Zapfen, einschließlich einer solchen um die Zapfenachse sowie eine gute Abdichtung gewährleistet.

Diese Aufgabe wird erfindungsgemäß dadurch gelöst, daß die Vordichtung aus einem elastisch verformbaren Material besteht, mit ihrem Steg mit radialer Vorspannung in der Nut des Zapfens des Zapfenkreuzes einsitzt und mit mindestens einer von der Innenfläche ihres Mantels zu ihrer Stirnfläche hin angeordneten und radial nach innen vorstehenden Dichtlippe auf der glatten, zylindrischen Außenfläche der Lagerbüchse mit Vorspannung anliegt und daß die Hauptdichtung als unter dem Abschmierdruck des in den Raum zwischen Zapfenaußenfläche und Innenfläche der Lagerbüchse eingepreßten Schmiermittels in Richtung Vordichtung öffnende Dichtung gestaltet ist, wozu die Hauptdichtung, im Querschnitt gesehen, U-förmig gestaltet ist und deren einer Schenkel in einer entsprechenden Bohrungsstufe der Lagerbüchse einsitzt und deren dazu radial nach innen zur Zapfenachse versetzter zweiter Schenkel radial federnd gestaltet ist und an seinem freien, zur Stirnfläche der Lagerbüchse hin angeordneten Ende mit einer Dichtlippe auf der Außenfläche des Zapfens abdichtend anliegt.

Von Vorteil bei dieser Ausbildung ist, daß die Anordnung der Vordichtung mit radialer Vorspannung in der Nut zu einem eindeutigen Festsitz der Vordichtung gegenüber dem Zapfenkreuz führt. Sie dreht sich damit ausschließlich gegenüber der Außenfläche der Lagerbüchse. Desgleichen läßt sie auch eine axiale Verschiebung der Vordichtung auf der Außenfläche der Lagerbüchse zu, ohne daß eine axiale Bewegung zwischen Zapfen und Vordichtung eintreten kann. Hierdurch wird gewährleistet, daß das Fett nur an der gewünschten Stelle zwischen der Außenfläche der Lagerbüchse und der Stirnfläche der Vordichtung austreten kann, um ein Fettpolster zwischen der Gelenkgabelinnenfläche und der Dichtung aufzubauen. Ein solches Fettpolster ist schmutzabweisend. Dies ist insbesondere beim rauhen Einsatz von Kreuzgelenken im Landmaschinensektor von Bedeutung. Der Schmutz wird von der Dichtstelle ferngehalten. Da eine Abdichtung auf einem relativ großen Durchmesser gegeben ist, wird in diesem Bereich auch eine Abschleuderwirkung des sich eventuell anlegenden Schmutzes erzeugt. Ein weiterer Vorteil ist dadurch gegeben, daß die Außenfläche der Lagerbüchse in der Regel eine geringe Rauhtiefe aufweist, denn sie ist vorzugsweise spanlos durch Tiefziehen hergestellt. Bei solchen Herstellverfahren ergeben sich glatte Oberflächen. Eine solche glatte Oberfläche führt zu einer geringeren Reibung und damit einen geringeren Verschleiß den anliegenden Dichtlippen. Ein weiterer Vorteil besteht darin, daß zwischen der Vordichtung und der Hauptdichtung ein Raum mit einem großen Fettvolumen gebildet wird, welches das Eindringen von Feuchtigkeit und Schmutzteilchen verhindert. Darüber hinaus wird aufgrund der Ausbildung der Hauptdichtung als Durchschmierdichtung beim Nachschmieren gewährleistet, daß das Fett aus diesem Bereich herausgedrückt wird und aus dem Zwischenraum zwischen der Vordichtung und der Außenfläche der Lagerbüchse entweichen kann.

Dadurch daß die Vordichtung axial auf dem Zapfen des Zapfenkreuzes festgelegt ist, kann sie auf der Außenfläche die bei landwirtschaftlichen Gelenken übliche große Axialbewegung ausführen, ohne daß dies Einfluß auf den Sitz und die Dichtigkeit der Abdichtung hat.

Eine besonders günstige Gestaltung ergibt sich dann, wenn, wie vorgeschlagen, zur Stirnfläche des Mantels der Vordichtung hin zwei Dichtlippen mit axialem Abstand voneinander angeordnet sind. Diese beiden Dichtlippen bilden dadurch zwischen sich einen weiteren Vorratsraum, in dem Fett festgehalten wird, welches zur Schmierung der Dichtlippen bei der Relativbewegung gegenüber der Außenfläche der Lagerbüchse genutzt wird.

Um die Vorspannung beim Vorhandensein mehrerer Dichtlippen an allen Dichtlippen gleichzuhalten, ist in Ausgestaltung der Erfindung vorgeschlagen, die jeweiligen Innendurchmesser der Dichtlippen im Fertigungszustand unterschiedlich zu gestalten. So weisen die Dichtlippen zu der der Stirnfläche der Vordichtung benachbarten Dichtlippe hin abnehmende Innendurchmesser auf. Die der Stirnfläche der Vordichtung benachbarte Dichtlippe weist entsprechend den kleinsten Innendurchmesser auf. Die Vorspannung nimmt vom Steg her zur Stirnfläche entlang der Länge des Mantels der Vordichtung ab, da die Vorspannkraft des Mantels mit dem Abstand der Dichtlippen vom Steg, mit dem die Vordichtung eingespannt ist, abnimmt.

Zur Erzielung eines guten Überganges zwischen dem Mantel und dem Steg ist vorgesehen, daß zwischen diesen ein kegelstumpfförmiger Übergangsbereich angeordnet ist.

Vorzugsweise ist die Nut im Querschnitt rechteckig gestaltet. Günstig ist eine Gestaltung als Kunststoffspritzgußteil und eine Herstellung aus Polyesterkautschuk.

Ein bevorzugtes Ausführungsbeispiel der Erfindung und dessen Anwendung bei einer landwirtschaftlichen Maschine sind in der Zeichnung schematisch dargestellt.

Es zeigt
- Figur 1: schematisch einen Traktor mit einem davon angetriebenen landwirtschaftlichen Gerät,
- Figur 2: ein Kreuzgelenk, teilweise geschnitten,
- Figur 3: einen Zapfen des Zapfenkreuzes mit Lagerbüchse und Dichtungen im vergrößerten Maßstab,
- Figur 4: die Vordichtung als Einzelteil im Längsschnitt, im vergrößerten Maßstab,
- Figur 5: die Einzelheit X gemäß Figur 4 im nochmals vergrößerten Maßstab,
- Figur 6: die Einzelheit Y gemäß Figur 3 im nochmals vergrößerten Maßstab und
- Figur 7: als Einzelheit Z von Figur 3 die ausschnittsweise Vergrößerung der Nut im Zapfen des Zapfenkreuzes.

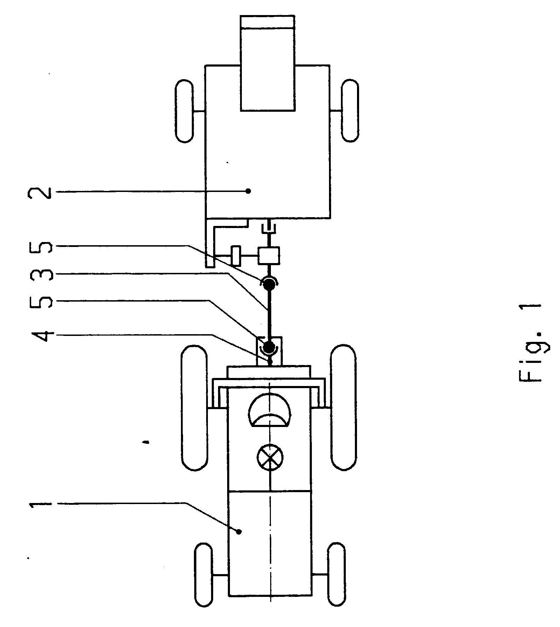

Aus Figur 1 ist der Traktor 1 mit dem daran über nicht dargestellte Mittel angeschlossenen Gerät 2 ersichtlich. Das Gerät 2 wird vom Traktor 1 gezogen und zusätzlich von diesem über die Gelenkwelle 3, die an die Zapfwelle 4 des Traktors angeschlossen ist, angetrieben. Die Gelenkwelle 3 weist an ihren beiden Enden Kreuzgelenke 5 auf, die eine Abwinklung zulassen. Die Kreuzgelenke 5 erlauben eine Abwinklung und damit Lageveränderung des Gerätes 2 dem Traktor gegenüber um beliebige Hoch- und Querachsen.

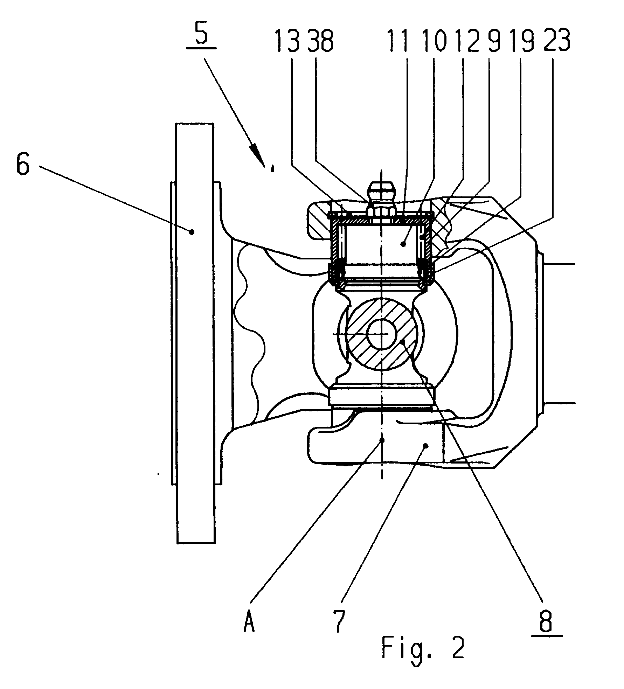

Aus Figur 2 ist ein einzelnes Kreuzgelenk 5, das Bestandteil der in Figur 1 dargestellten Kreuzgelenkwelle 3 ist, in einer Seitenansicht zu erkennen.

Das Kreuzgelenk 5 besteht aus den beiden Gelenkgabeln 6,7, die durch ein Zapfenkreuz 8 gelenkig miteinander verbunden sind. Hierzu weist das Zapfenkreuz 8 vier rechtwinklig zueinander stehende und in einer Ebene angeordnete Zapfen 10 auf. Jeweils zwei Zapfen 10 weisen eine gemeinsame Zapfenachse A auf. Die Zapfen 10 des Zapfenkreuzes 8 sind jeweils unter Zwischenschaltung von Lagerbüchsen 11 in Lagerbohrungen 9 in den Gabelarmen der beiden Gelenkgabeln 6,7 aufgenommen. Die Lagerbüchsen 11 weisen einen Boden auf, der gegen die Stirnfläche des zugehörigen Zapfens 10 anliegt. Die Lagerbüchse 11 ist in der Lagerbohrung 9 durch einen Sicherungsring 13 gegen axiales Verschieben gehalten. Zwischen der Innenfläche der Lagerbüchse 11 und der Außenfläche des Zapfens 10 sind Wälzkörper 12 in Form von Lagernadeln angeordnet, so daß ein Abwälzen bei einer relativen Drehbewegung zwischen Zapfen 10 und Lagerbüchse 11 stattfindet. Die Lagerbüchse 11 ist an ihrem offenen Ende über eine Hauptdichtung 19 und eine Vordichtung 23 abgedichtet. Die Ausbildung und Anordnung von Hauptdichtung 19 und Vordichtung 23 im Verhältnis zum Zapfen 10 des Zapfenkreuzes 8 und zur Lagerbüchse 11 ist anhand der nachfolgenden Zeichnungsfiguren 3 bis 7 näher erläutert.

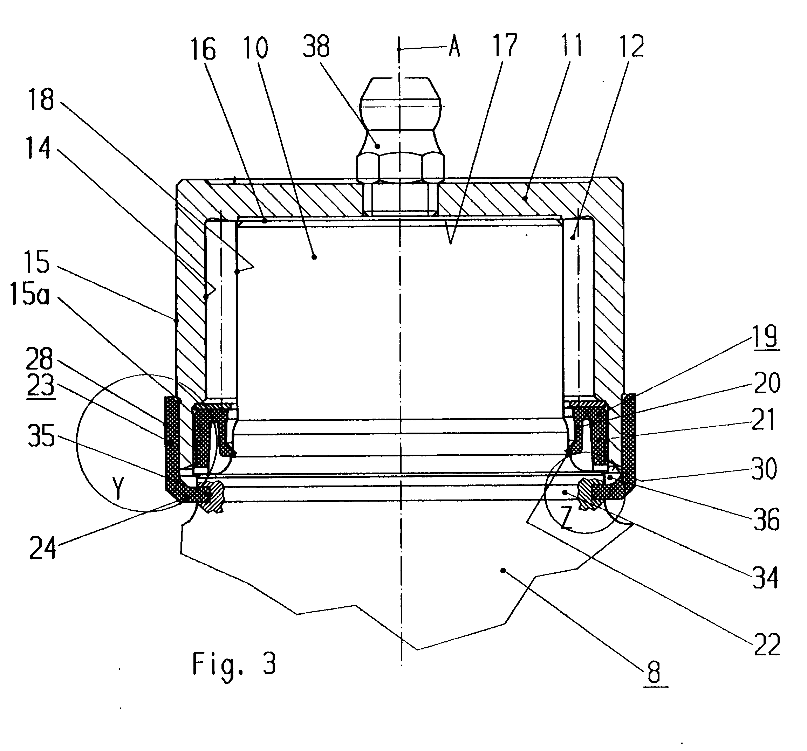

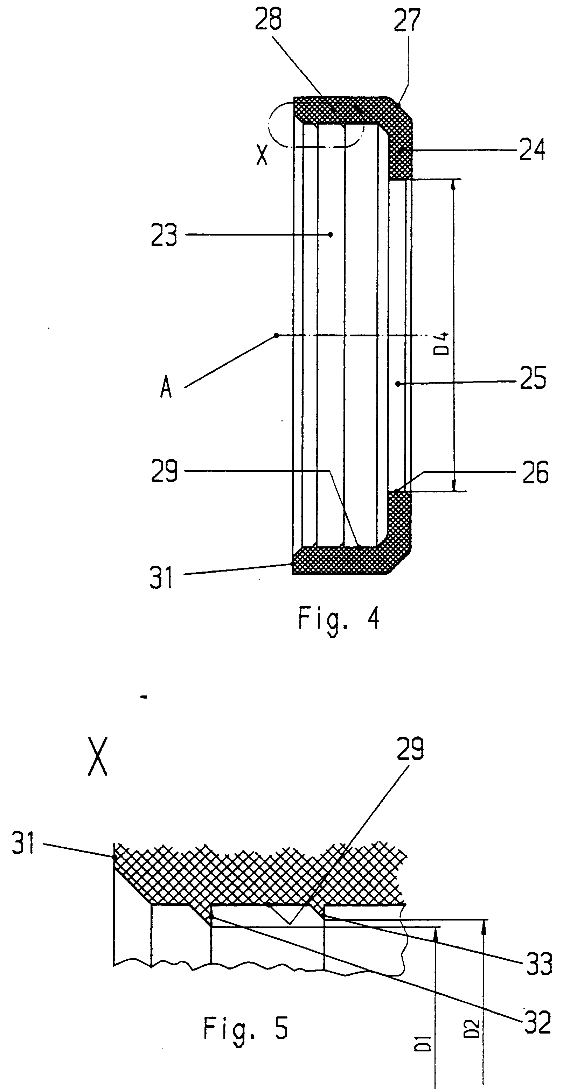

Aus Figur 3 ist die Zuordnung einer Lagerbüchse 11 zu einem Zapfen 10 des Zapfenkreuzes 8 ersichtlich. Es ist erkennbar, daß zwischen der Innenfläche 14 der Lagerbüchse 11 und der Außenfläche 18 des Zapfens 10 Wälzkörper in Form von Nadeln 12 angeordnet sind. Ferner ist erkennbar, daß die Lagerbüchse 11 mit ihrem Boden 17 an der Zapfenendfläche 16 anliegt. Des weiteren ist ein in den Büchsenboden eingeschraubter Schmiernippel 38 ersichtlich, der zum Zuführen von Schmiermittel dient. Die in der Lagerbohrung 9 der aus Figur 2 ersichtlichen Gelenkgabel aufgenommene Außenfläche der Lagerbüchse 11 ist mit 15 bezeichnet. Über einen axial kürzeren Abschnitt ist die Außenfläche 15 im Durchmesser verringert. Diese Fläche ist mit 15a bezeichnet und geht von der dem Boden der Lagerbüchse 11 abgewandten Stirnfläche 30 derselben aus. In dem Ringraum zwischen der Außenfläche 18 des Zapfens 10 und der Innenfläche 14 der Lagerbüchse 11 ist von der Stirnseite 30 her eine Hauptdichtung 19 eingesetzt, die im Querschnitt gesehen U-förmig gestaltet ist. Deren einer Schenkel 21 sitzt in einer entsprechenden Bohrungsstufe der Lagerbüchse 11 ein. Deren dazu radial nach innen versetzter zweiter Schenkel 20 ist radial federnd gestaltet und trägt an seinem freien Ende die Dichtlippe 22, die auf der Außenfläche eines Absatzes des Zapfens 10 abdichtend anliegt. Das freie Ende und damit die Dichtlippe 22 sind zu der Stirnfläche 30 hin angeordnet. Hierdurch wird eine Abschmierbarkeit der Hauptdichtung 19 erzielt, da sich beim Einpressen von Schmiermittel über den Schmiernippel 38 beim Nachschmieren die Dichtlippe 22 durch Zurückfedern des Schenkels 20 von der Außenfläche des Zapfens 10 abhebt. Durch den entstehenden Spalt kann Schmiermittel in Richtung auf die Vordichtung 23 entweichen. Die Vordichtung 23 sitzt in einer um den Zapfen 10 umlaufenden Nut 34 des Zapfenkreuzes 8 mit einem Steg 24 fest ein, so daß sie gegenüber dem Zapfenkreuz 8 weder eine Relativbewegung im rotativen noch im axialen Sinne ausführen kann. Die Vordichtung 23 übergreift die Außenfläche 15a der Lagerbüchse 11 von deren Stirnfläche 30 her. Der zwischen der Hauptdichtung 19 und der Vordichtung 23 gebildete Raum ist mit 36 bezeichnet. Die Ausbildung und Wirkungsweise der Vordichtung 23 ist anhand der Figuren 4 bis 7 näher erläutert.

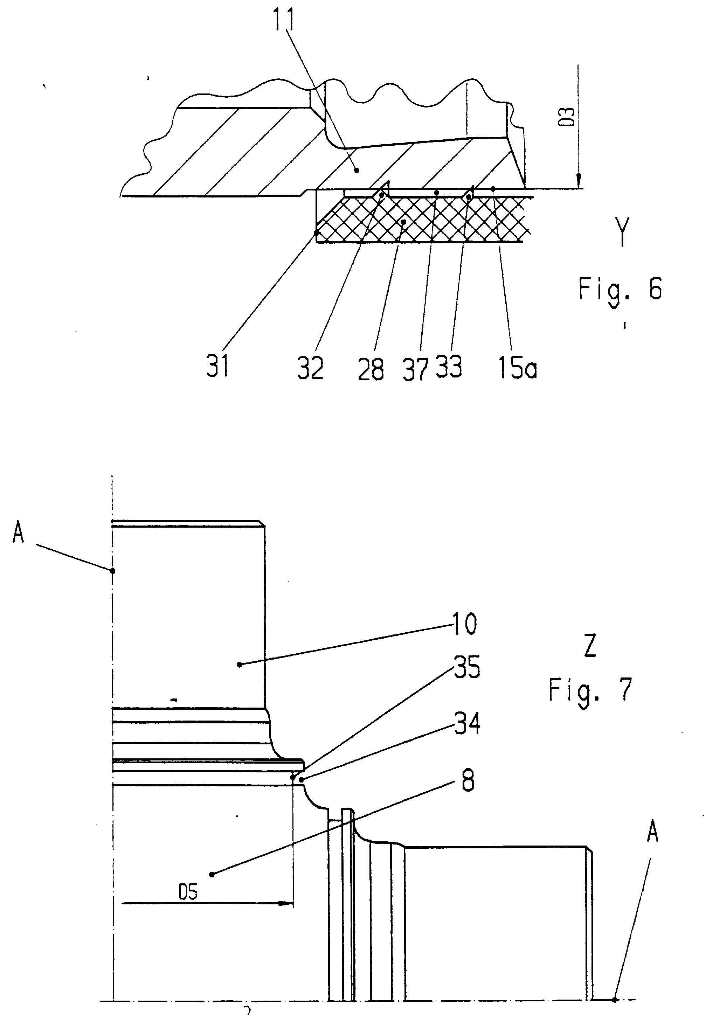

Aus Figur 4 ist die Vordichtung 23 im Längsschnitt ersichtlich. Die Vordichtung 23 besteht aus dem radial bezüglich der Zapfenachse A nach innen gerichtet verlaufenden Steg 24, in dem eine axial verlaufende Bohrung 25 eingebracht ist, deren Bohrungswandung mit 26 und deren Durchmesser mit D4 bezeichnet sind. Ausgehend vom radial äußeren Ende des Steges 24 schließt an diesen ein kegelstumpfartiger Übergangsbereich 27 an, der in den zylindrisch verlaufenden Mantel 28 übergeht. Zur Stirnfläche 31 des Mantels 28 hin stehen von der Mantelinnenfläche 29 zwei zueinander beabstandete Dichtlippen 32 und 33 radial nach innen vor. Die erste Dichtlippe 32 läßt, gemessen über ihr radial inneres Ende, einen Durchmesser D1 frei. Der Innendurchmesser der dazu axial weiter in das Innere des Mantels 28 hineinversetzten zweiten Dichtlippe 33 ist mit D2 bezeichnet. Da der axiale Abstand der ersten Dichtlippe 32 von dem Steg 24 größer ist, als der der zweiten Dichtlippe 33 von demselben. Ferner ist der Durchmesser D1 kleiner als der Durchmesser D2 gestaltet, um den sich aus dem größeren Abstand ergebenden Vorspannungsverlust ausgleichen zu können. Somit liegen beide Dichtlippen 32,33, wie aus der Einzelheit Y gemäß Figur 6 vergrößert ersichtlich, auf der Außenfläche 15a der Lagerbüchse 11 mit gleicher Vorspannung an. Zwischen den beiden Dichtlippen 32,33 und der Außenfläche 15a der Lagerbüchse 11 wird ein Raum gebildet, in dem Schmiermittel eingeschlossen gehalten wird, welches zur Schmierung der Außenfläche 15a dient. Es setzt damit die Reibung zwischen den Dichtlippen 32,33 und der Außenfläche 15a der Lagerbüchse 11 herab. Hierdurch kann eine größere Vorspannung als üblich gewählt werden. Die Vorspannung ist gekennzeichnet durch den Unterschied zwischen dem Außendurchmesser D3 der Außenfläche 15a und den Innendurchmessern D1,D2 der beiden Dichtungslippen 32,33. Dabei ist der Durchmesserunterschied nur im Fertigungszustand der Vordichtung 23 gegeben, d.h. die beiden Innendurchmesser D1,D2 sind bei der unmontierten Vordichtung 23 kleiner als der Durchmesser D3 der Außenfläche 15a der Lagerbüchse 11.

Die Vordichtung 23 sitzt in der Nut 34 des Zapfenkreuzes 8 mit Vorspannung ein. Hierzu ist der Nutgrund 35 der aus Figur 7 ersichtlichen Nut 34 im Zapfen 10 des Zapfenkreuzes 8 mit einem Durchmesser D5 ausgestattet, der größer ist als der aus Figur 4 ersichtliche Bohrungsdurchmesser D4 der Bohrung 25 im Steg 24. Hierdurch wird ein Festsitz zwischen Vordichtung 23 und Zapfenkreuz 8 erzielt.

Zum Abschmieren des Zapfenkreuzes 8 durch Einpressen von Schmiermittel über den Schmiernippel 38 gelangt dieses über die Zwischenräume zwischen den aus Figur 3 ersichtlichen Wälzkörpern 12 sowie der Zapfenaußenfläche 18 und der Lagerbüchseninnenfläche 14 in den Bereich der Hauptdichtung 19 und, wie bereits beschrieben, über den Spalt der unter dem Schmiermitteldruck durch Zurückfedern des Schenkels 20 und Abheben der Dichtlippe 22 von der gegenüberliegenden Sitzfläche des Zapfen 10 in den Raum 36 zwischen Hauptdichtung 19 und Vordichtung 23 und dann zwischen der Außenfläche 15a und dem Mantel 28 durch Auffedern des Mantels 28 und damit durch Abheben der beiden Dichtlippen 33,33 von der Außenfläche 15a ins Freie. Es bilden sich dabei Fettpolster im Raum 37 zwischen den beiden Dichtlippen 32,33 und in Form einer Wulst zwischen der Stirnfläche 31 der Vordichtung 23 und der Außenfläche 15a, die das Eindringen von Schmutz verhindern. Die Lagerbüchse 11 ist ein spanlos hergestelltes Tiefziehteil, dessen Außenfläche 15,15a aufgrund des Tiefziehvorganges eine hervorragende Oberflächengüte mit einer äußerst geringen Rauhtiefe aufweist, so daß die Reibung zwischen den Dichtlippen 32,33 und der Außenfläche 15a äußerst gering ist. Diese wird noch durch das Schmiermittel herabgesetzt. Hierdurch kann eine hohe Vorspannkraft der Vordichtung 23 auf der Außenfläche 15a gewählt werden. Darüberhinaus läßt die Anordnung eine axiale Bewegung zwischen der ortsfest am Zapfenkreuz 8 gehaltenen Vordichtung 23 und der Lagerbüchse 11 zu.

### Bezugszeichenliste

- 1: Traktor
- 2: Gerät
- 3: Gelenkwelle
- 4: Zapfwelle
- 5: Kreuzgelenk
- 6,7: Gelenkgabel
- 8: Zapfenkreuz
- 9: Lagerbohrung
- 10: Zapfen
- 11: Lagerbüchse
- 12: Wälzkörper
- 13: Sicherungsring
- 14: Innenfläche der Lagerbüchse
- 15,15a: Außenfläche der Lagerbüchse
- 16: Zapfenendfläche
- 17: Bodenfläche der Lagerbüchse
- 18: Zapfenaußenfläche
- 19: Hauptdichtung
- 20: zweiter Schenkel
- 21: erster Schenkel
- 22: Dichtlippe
- 23: Vordichtung
- 24: Steg
- 25: Bohrung des Steges
- 26: Bohrungswandung des Steges
- 27: Übergangsbereich
- 28: Mantel

## Patentansprüche

1. Dichtungsanordnung für die Abdichtung der Zapfen (10) eines zu einem Kreuzgelenk (5) für den Einsatz im Antriebsstrang oder für den Antrieb von landwirtschaftlichen Geräten und Arbeitsmaschinen gehörenden Zapfenkreuzes (8), jweils gegenüber der den Zapfen (10) lagernden, einseitig geschlossenen Lagerbüchse (11), mit einer Hauptdichtung (19), die zwischen der Innenfläche (14) der Lagerbüchse (11) und der Außenfläche (18) des Zapfens (10) angeordnet ist, und einer Vordichtung (23), die am Zapfenkreuz (8) ortsfest gehalten ist und die Lagerbüchse (11) außen übergreift, wobei die Vordichtung (23) mit einem bezüglich der Achse (A) des zugehörigen Zapfens (10) radial nach innen gerichteten Steg (24) in einer um den Zapfen (10) umlaufenden Nut (34) ortsfest einsitzt und die Vordichtung (23) mit ihrem Mantel (28) die Außenfläche (15, 15a) der zugehörigen Lagerbüchse (11) von deren offenen Stirnfläche (30) her einen Teil deren axialer Länge überdeckt.
dadurch gekennzeichnet,
daß die Vordichtung (23) aus einem elastisch verformbaren Material besteht, mit ihrem Steg (24) mit radialer Vorspannung in der Nut (34) des Zapfens (10) des Zapfenkreuzes (8) einsitzt und mit mindestens einer von der Innenfläche (29) ihres Mantels (28) zu ihrer Stirnfläche (31) hin angeordneten und radial nach innen vorstehenden Dichtlippe (32, 33) auf der glatten, zylindrischen Außenfläche (15, 15a) der Lagerbüchse (11) mit Vorspannung anliegt und daß die Hauptdichtung (19) als unter dem Abschmierdruck des in den Raum zwischen Zapfenaußenfläche (18) und Innenfläche (14) der Lagerbüchse (11) eingepreßten Schmiermittels in Richtung Vordichtung öffnende Dichtung gestaltet ist, wozu die Hauptdichtung (19) im Querschnitt gesehen U-förmig gestaltet ist und deren einer Schenkel (21) in einer entsprechenden Bohrungsstufe der Lagerbüchse (11) einsitzt und deren dazu radial nach innen zur Zapfenachse (A) versetzter zweiter Schenkel (20) radial federnd gestaltet ist und an seinem freien zur Stirnfläche (30) der Lagerbüchse (39) hin angeordnetes Ende mit einer Dichtlippe (22) auf der Außenfläche des Zapfens (10) abdichtend anliegt.

2. Dichtungsanordnung nach Anspruch 1,
dadurch gekennzeichnet,
daß zur Stirnfläche (31) des Mantels (28) der Vordichtung (23) hin zwei Dichtlippen (32, 33) mit axialem Abstand voneinander angeordnet sind.

3. Dichtungsanordnung nach einem der Ansprüche 1 oder 2,
dadurch gekennzeichnet,
daß der jeweilige Innendurchmesser (DE1, DE2) der Dichtlippen (32, 33) im Fertigungszustand zu der der Stirnfläche (31) der Vordichtung (23) benachbarten Dichtlippe (32) hin abnimmt.

4. Dichtungsanordnung nach Anspruch 1,
dadurch gekennzeichnet,
daß zwischen dem Mantel (28) und dem Steg (24) der Vordichtung (23) ein kegelstumpfförmiger Übergangsbereich (27) angeordnet ist.

5. Dichtungsanordnung nach Anspruch 1,
dadurch gekennzeichnet,
daß die Nut (34) im Querschnitt rechteckig gestaltet ist.

6. Dichtungsanordnung nach einem der Ansprüche 1 bis 5,
dadurch gekennzeichnet,
daß die Vordichtung (23) ein Kunststoffspitzgußteil ist.

7. Dichtungsanordnung nach einem der Ansprüche 1 bis 6,
dadurch gekennzeichnet,
daß die Vordichtung (23) aus Polyesterkautschuk besteht.

8. Dichtungsanordnung nach Anspruch 1,
dadurch gekennzeichnet,
daß die Lagerbüchse (11) als spanlos durch Tiefziehen hergestelltes Bauteil ausgebildet ist.

## Claims

1. A sealing assembly for sealing the arms (10) of a cross member (8) associated with a universal joint (5) used in the drivelines or drives of agricultural implements or working machinery, relative to the bearing bush (11) which supports the arm (10) and is closed on one side, said sealing assembly having a main seal (19) arranged between the inner face (14) of the bearing bush (11) and the outer face (18) of the arm (10), and a preseal (12) which is fixed at the cross member (8) and extends over the outside of the bearing bush (11), with the preseal (23), by means of a web (24) extending radially inwardly relative to the axis (A) of the associated arm (10), fixedly engaging a groove (34) extending around the arm (10) and, furthermore, with the preseal (23), by means of its casing (28), covering the outer face (15, 15a) of the associated bearing bush (11) from the open end face (30) of same along part of the axial length of same, characterised in
that the preseal (23) consists of an elastically deformable material, engages by means of its web (24) the groove (34) of the arm (10) with radial pretension and, by means of at least one radially inwardly projecting sealing lip (32, 33) arranged from the inner face (29) of its casing (28) towards its end face (31), rests on the smooth cylindrical outer face (15, 15a) of the bearing bush (11), and that the main seal (19) is provided in the form of a seal which, under the lubrication pressure of the lubricant pressed into the chamber between the outer arm face (18) and the inner face (14) of the bearing bush (11), opens towards the preseal, for which purpose, the main seal (19) is U-shaped if viewed in its cross-section, with the one leg (21) of the main seal (19) engaging a corresponding bore step of the bearing bush (11) and with the second leg (20) of same offset radially inwardly relative thereto towards the arm axis (A) being designed so as to be radially resilient and, at its free end arranged towards the end face (30) of the bearing bush (39), sealingly resting against the outer face of the arm (10) by means of a sealing lip (22).

2. A sealing assembly according to claim 1,
characterised in
that towards the end face (31) of the casing (28) of the preseal (23) there are arranged two axially spaced sealing lips (32, 33).

3. A sealing assembly according to any one of claims 1 or 2,
characterised in
that the respective inner diameters (DE1, DE2) of the sealing lips (32, 33) in the condition as produced decrease towards the sealing lip (32) adjoining the end face (31) of the preseal (32).

4. A sealing assembly according to claim 1,
characterised in
between the casing (28) and the web (24) of the preseal (23) there is arranged a transition region (27) in the shape of a truncated cone.

5. A sealing assembly according to claim 1,
characterised in
that the cross-section of the groove (34) is rectangular.

6. A sealing assembly according to any one of claims 1 to 4,
characterised in
that the preseal (23) is a plastic injection moulded part.

7. A sealing assembly according to any one of claims 1 to 6,
characterised in
that the preseal (23) consists of polyester rubber.

8. A sealing assembly according to claim 1,
characterised in
that the bearing bush (11) is provided in the form of a component produced by a non-chip forming method by deep-drawing.

## Revendications

1. Dispositif d'étanchement pour étancher les tourrillons (10) d'un croisillon (8) qui appartient à un joint à croisillon (5) pour l'utilisation dans le train d'entraînement ou pour l'entraînement d'appareils et de machines agricoles, comprenant un joint principal (19) respectivement à l'opposé des douilles de montage (11) qui assurent le montage des tourrillons (10) et qui sont fermées d'un côté, ledit joint principal étant agencé entre la surface intérieure (14) de la douille de montage (11) et la surface extérieure (18) du tourrillon (10), et un joint préliminaire (23) qui est tenu de façon fixe sur le croisillon (8) et qui coiffe la douille de montage (11) à l'extérieur, dans lequel le joint préliminaire (23) est fermement monté dans une gorge (34) périphérique autour du tourrillon (10), au moyen d'une barrette (24) dirigée radialement vers l'intérieur par rapport à l'axe (A) du tourrillon associé (10), et le joint préliminaire (23) coiffe par son enveloppe (28) la surface extérieure (15, 15a) de la douille de montage associée (11) depuis sa surface frontale ouverte (31) et sur des parties de sa longueur axiale,
caractérisé en ce que
le joint préliminaire (23) est réalisé en un matériau élastiquement déformable, en ce qu'il est logé avec sa barrette (24) sous une précontrainte radiale dans la gorge (34) du tourrillon (10) de croisillon (8), et s'appuie sous précontrainte sur la surface extérieure lisse et cylindrique (15, 15a) de la douille de montage (11), à l'aide d'au moins une lèvre d'étanchéité (32, 33) agencée depuis la surface intérieure (29) de son enveloppe (28) en direction de sa surface frontale (31) et dirigée radialement vers l'intérieur, et en ce que le joint principal (19) est conçu sous la forme d'un joint qui s'ouvre en direction du joint préliminaire sous la pression de lubrifiant forcé dans l'espace entre la surface extérieure du tourrillon (18) est la surface intérieure (14) de la douille de montage (11), ce pourquoi le joint principal (19) est réalisé en forme de U, vu en section transversale, et l'un de ses bras (21) est logé dans un gradin de perçage correspondant de la douille de montage (11) et son second bras (20), décalé radialement par rapport au premier en direction de l'intérieur vers l'axe du tourrillon (A), est réalisé de façon élastique et s'appuie de façon étanche sur la surface extérieure du tourrillon (10) au moyen d'une lèvre d'étanchéité (22) à son extrémité libre agencée en direction de la surface frontale (30) de la douille de montage (39).

2. Dispositif d'étanchéité selon la revendication 1, caractérisé en ce que deux lèvres d'étanchéité (32, 33) sont agencées à distance axiale l'une de l'autre vers la surface frontale (31) de l'enveloppe (28) du joint préliminaire (23).

3. Dispositif d'étanchéité selon l'une ou l'autre des revendications 1 et 2, caractérisé en ce que le diamètre intérieur respectif (DE1, DE2) des lèvres d'étanchéité (32, 33) diminue à l'état terminé en direction de la lèvre d'étanchéité (32) voisine de la surface frontale (31) du joint préliminaire (23).

4. Dispositif d'étanchéité selon la revendication 1, caractérisé en ce que, entre l'enveloppe (28) et la barrette (24) du joint préliminaire (23) est agencée une zone de transition (27) en forme de tronc de cône.

5. Dispositif d'étanchéité selon la revendication 1, caractérisé en ce que la gorge (34) est de forme rectangulaire en section transversale.

6. Dispositif d'étanchéité selon l'une des revendications 1 à 5, caractérisé en ce que le joint préliminaire (23) est une pièce en matière plastique injectée.

7. Dispositif d'étanchéité selon l'une des revendications 1 à 6, caractérisé en ce que le joint préliminaire (23) est réalisé en caoutchouc au polyester.

8. Dispositif d'étanchéité selon la revendication 1, caractérisé en ce que la douille de montage (11) est réalisée sous forme d'un composant produit par emboutissage sans enlèvement de matière.
